(19) Europäisches Patentamt

European Patent Office

Office européen des brevets

(11) EP 1 392 015 A1

(12) EUROPEAN PATENT APPLICATION
published in accordance with Art. 158(3) EPC

(43) Date of publication:
25.02.2004 Bulletin 2004/09

(51) Int Cl.⁷: **H04J 11/00**, H04J 13/04

(21) Application number: 03701884.3

(22) Date of filing: 27.01.2003

(86) International application number:
PCT/JP2003/000730

(87) International publication number:
WO 2003/071724 (28.08.2003 Gazette 2003/35)

(84) Designated Contracting States:
AT BE BG CH CY CZ DE DK EE ES FI FR GB GR
HU IE IT LI LU MC NL
Designated Extension States:
AL LT LV MK RO

(30) Priority: 20.02.2002 JP 2002043160
13.05.2002 JP 2002137238

(71) Applicant: MITSUBISHI DENKI KABUSHIKI
KAISHA
Tokyo 100-8310 (JP)

(72) Inventors:
• YAMAZAKI, Kenichiro, c/o Mitsubishi Denki K. K.
Tokyo 100-8310 (JP)
• ISHIZU, Fumio,
c/o Mitsubishi Denki Kabushiki K.
Tokyo 100-8310 (JP)

(74) Representative: Gleiter, Hermann
Pfenning, Meinig & Partner GbR
Mozartstrasse 17
80336 München (DE)

(54) **SYMBOL TIMING CORRECTING CIRCUIT, RECEIVER, SYMBOL TIMING CORRECTING METHOD, AND DEMODULATION PROCESSING METHOD**

(57)     A receiver includes a frequency characteristics calculating unit receives a received signal that includes a known pilot sequence and an initial symbol timing signal that is generated based on a correlation value of the received signal. The frequency characteristics calculating unit performs fast Fourier transform (FFT) on the received signal according to the initial symbol timing signal, extracts the pilot data sequence from the received signal, and calculates frequency characteristics of a channel between the receiver and a transmitter that has transmitted the received signal. An inverse fast Fourier transform (IFFT) unit performs IFFT on the frequency characteristics to thereby generate a channel impulse response. A symbol timing correction unit corrects a symbol timing using the channel impulse response.

FIG.1

**Description**

TECHNICAL FIELD

The present invention relates to a signal demodulation processing. Particularly, the present invention relates to an improvement in a symbol timing correction circuit for a digital radio communication system, a digital broadcasting system, or the like, and a receiver on which the symbol timing correction method is installed.

BACKGROUND ART

In the orthogonal frequency division multiplexing (hereinafter, "OFDM") modulation system, a transmitter performs following operations. That is, the transmitter converts a data sequence, which is to be transmitted, into a plurality of parallel sub-carrier data sequence, separately modulates each sub-carrier data sequence, based on a modulation system such as the binary phase shift keying (hereinafter, "BPSK"), the quadrature phase shift keying (hereinafter, "QPSK"), or the quadrature amplitude modulation (hereinafter, "QAM"), subjects each modulated signal to inverse fast Fourier transform (hereinafter, "IFFT") on in a predetermined effective symbol time cycle to generate an OFDM modulation signal, and transmits the resultant signal.

On the other hand, a receiver performs following functions. That is, the receiver, subjects the OFDM modulation signal to fast Fourier transform (hereinafter, "FFT") in the predetermined effective symbol time cycle, thereby to reproduce each sub-carrier data sequence, and converts the parallel data into sequence data thereby to obtain a demodulation data sequence. Therefore, in order to properly set a time frame (hereinafter, "time window") of the fast Fourier transform processing, the receiver needs to precisely detect a symbol timing of the OFDM modulation signal.

Accordingly, in the conventional radio communication system of the OFDM modulation system, the following method is widely used. In other words, a repetitive signal component of the IFFT modulation signal normally called a guard interval (GI) is inserted into the OFDM modulation signal for each symbol cycle. The receiver sequentially calculates a correlation of the OFDM modulation signal, thereby to detect the symbol timing based on the correlation value.

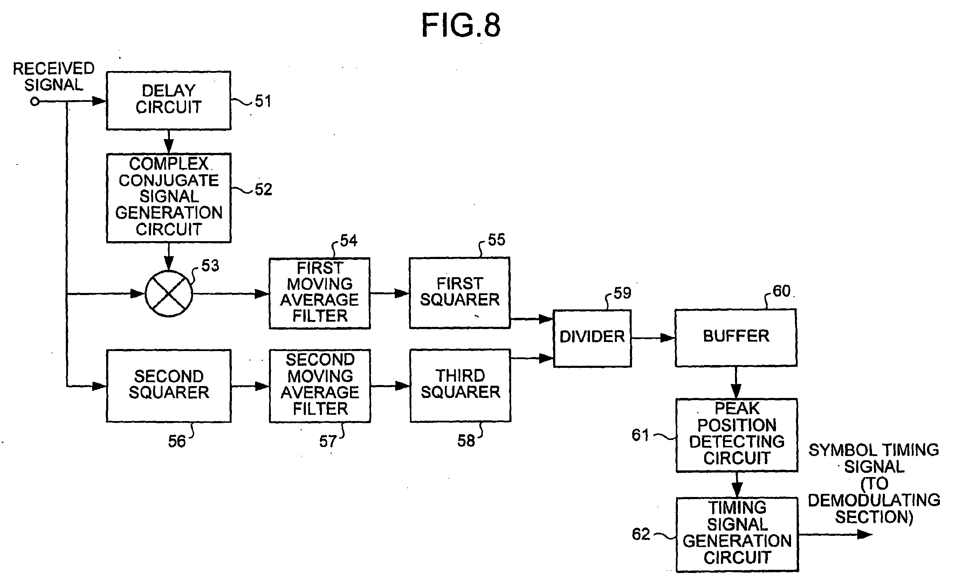

Fig. 8 is a structure diagram of a conventional symbol timing detecting circuit for demodulating the OFDM signal disclosed in Japanese Patent Application Laid-open Publication No. 2001-217802.

A received signal is input to a delay circuit 51, which delays the received signal by a predetermined delay amount Tu. The delay amount Tu is set to a time length of the time window of the IFFT and the FFT according to the OFDM modulation system. The delay amount Tu is the same as the effective symbol time cycle length as a unit time of the modulation and demodulation processing according to the OFDM modulation system.

A complex conjugate signal generation circuit 52 calculates a complex conjugate signal of a delayed received signal. A multiplier 53 multiplies the received signal by the complex conjugate signal. A first moving average filter moving averages output signals from the multiplier 53 during a time length Tg of the GI prescribed according to the OFDM modulation system. A first squarer 55 squares a moving averaged signal, and outputs a first squared output signal.

On the other hand, a second squarer 56 squares the received signal. A second moving average filter 57 moving averages the squared received signals during the time length Tg. A third squarer 58 squares an output signal from the second moving average filter 57, and outputs a second squared output signal.

A dividing circuit 59 divides the first squared output signal by the second squared output signal, thereby to obtain a correlation value signal.

A buffer 60 stores in advance a threshold value of a correlation value signal for an effective symbol timing detection. The buffer 60 sequentially compares the correlation value signal with the threshold value. When a correlation value larger than the threshold value is detected, the buffer 60 accumulates these correlation value signals during a constant period starting from this time.

A peak position detecting circuit 61 detects a peak position of the correlation values from the correlation value signals accumulated in the buffer 60. A timing signal generation circuit 62 generates a symbol timing signal based on the detected peak position.

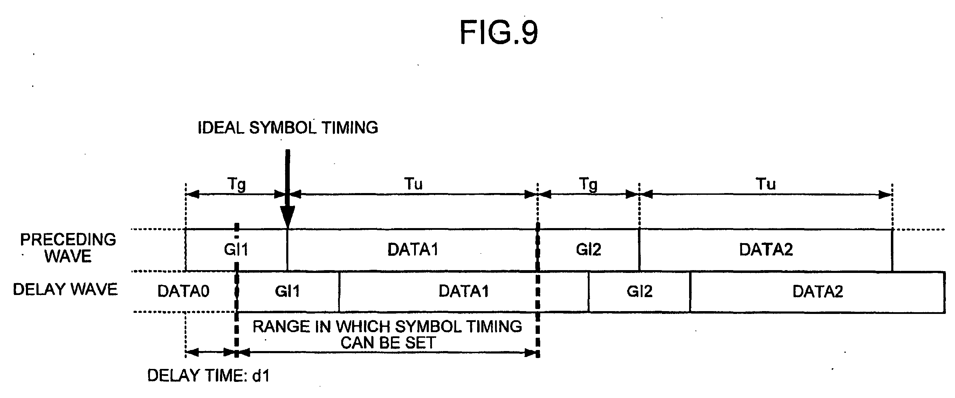

An ideal symbol timing position will be explained based on Fig. 9 as an explanatory diagram of a delay wave reception in a multi-path channel environment.

In the FTT processing of the receiver, when a time window for demodulation includes symbol data transmitted before and after a symbol to be demodulated, an inter-symbol interference occurs, and this degrades demodulation characteristics. Therefore, in order to increase the demodulation precision of the received signal, it is preferable that the time window of the FTT processing includes. only the symbol data to be demodulated.

A situation of symbol DATA1 as a symbol to be demodulated shown in Fig. 9 will be examined. A range in which the symbol timing can be set as a starting position of the FTT time window is from the head of a guard interval GI1 of the delay wave to the tail of the symbol DATA of the preceding wave.

Considering a fact that the length of the time window is the same as the effective symbol time cycle length Tu, the most ideal symbol timing is the header position of the symbol DATA1 of the preceding wave that maximizes a permissible range of a delay time d1 of the delay wave.

However, when the reception power of the delay wave is larger than that of the preceding wave, a peak position of the correlation value signal is deviated backward from the ideal symbol timing to be detected. Therefore, an inter-symbol interference occurs between the peak position and succeeding symbols (GI2 and DATA2), which degrades the demodulation characteristics.

Further, the conventional symbol timing generation circuit for demodulating the OFDM signal calculates a correlation value signal between the received signal and the received signal after a predetermined delay. This circuit detects the symbol timing based on the peak position of the correlation value signal. Therefore, when a proportion of noise power in the power of the received signal becomes large, the peak of the correlation value signal is mildly slowed down, which degrades the detection precision of the symbol timing.

Therefore, it is an object of the present invention to provide a symbol timing correction circuit, a receiver, a symbol timing correction method, and a demodulation processing method capable of specifying a symbol timing in higher precision, when the reception power of a delay wave is large or when the proportion of noise power in the reception power is large in the multi-path channel environment.

DISCLOSURE OF THE INVENTION

The present invention provides a symbol timing correction circuit which is installed in a receiver of a communication system and corrects a demodulation processing symbol timing, comprising: a frequency characteristics calculating unit that inputs a received signal into which a predetermined pilot sequence is inserted by a transmitter, and an initial symbol timing signal that is generated according to a predetermined method based on the received signal, and that calculates frequency characteristics of a channel between the transmitter and the receiver based on a pilot sequence extracted from the received signal according to the initial symbol timing signal; a frequency-to-time response converting unit that converts a frequency of the frequency characteristics into a channel impulse response; and a symbol timing correction unit that corrects a symbol timing based on the channel impulse response.

The next invention provides the symbol timing correction circuit, wherein the symbol timing correction unit compares a channel impulse response with a predetermined symbol timing correction threshold value thereby to detect a channel impulse response of a preceding wave, and corrects a symbol timing based on a detection timing of the channel impulse response.

The next invention provides the symbol timing correction circuit, wherein the symbol timing correction unit determines a symbol timing correction threshold value based on a power value of a channel impulse response.

The next invention provides the symbol timing correction circuit, wherein the symbol timing correction unit determines a symbol timing correction threshold value based on an amplitude of a channel impulse response.

The next invention provides the symbol timing correction circuit, wherein the symbol timing correction unit comprises: a memory unit that stores a plurality of channel impulse responses concerning symbol data; and an averaging unit that averages the plurality of channel impulse responses, and generates an averaged channel impulse response, wherein the symbol timing correction unit corrects a symbol timing based on the averaged channel impulse response.

The next invention provides the symbol timing correction circuit, wherein the frequency characteristics calculating unit further comprises an averaging unit that averages a plurality of frequency characteristics concerning symbol data, and generates averaged frequency characteristics, wherein the frequency-to-time response converting unit converts a frequency of the frequency characteristics into a channel impulse response.

A receiver according to the next invention comprises: an initial timing detecting unit that inputs a received signal into which a predetermined pilot sequence is inserted by a transmitter and which is demodulated according to a predetermined system, and sequentially calculates a correlation value of the received signal, and generates an initial symbol timing signal based on the correlation value; the symbol timing correction circuit; and a demodulating unit that demodulates the received signal according to the predetermined system, wherein in a symbol timing corrected state, a frequency characteristics calculating unit of the symbol timing correction circuit extracts a pilot sequence according to a symbol timing signal after correction, and calculates frequency characteristics after the correction of the symbol timing, and the demodulating unit demodulates a received signal based on the frequency characteristics after the correction of the symbol timing.

The next invention provides the receiver, wherein the initial timing detecting unit sequentially calculates a correlation value based on a received signal of a predetermined time shorter than a time necessary to obtain a target symbol timing detection precision, and generates an initial symbol timing signal based on the correlation value.

The receiver according to the next invention inputs a received signal that is after an orthogonal frequency division multiplexing modulation processing, wherein in a symbol timing corrected state, the demodulating unit carries out the orthogonal frequency division multiplexing demodulation processing of the received signal, based on symbol timing corrected frequency characteristics.

The receiver according to the next invention inputs a received signal that is after a multi-carrier code division multiple access modulation processing, wherein in a symbol timing corrected state, the demodulating unit carries out the multi-carrier code division multiple access demodulation processing of the received signal, based on symbol timing corrected frequency characteristics.

The next invention provides a symbol timing correction method which is for correcting a demodulation processing symbol timing in a receiver of a communication system, comprising: a frequency characteristics calculating step of inputting a received signal into which a predetermined pilot sequence is inserted by a transmitter, and an initial symbol timing signal that is generated according to a predetermined method based on the received signal, and calculating frequency characteristics of a channel between the transmitter and the receiver based on a pilot sequence extracted from the received signal according to the initial symbol timing signal; a frequency-to-time response converting step of converting a frequency of the frequency characteristics into a channel impulse response; and a symbol timing correction step of correcting a symbol timing based on the channel impulse response.

A demodulation processing method according to the present invention comprises: an initial timing detecting step of inputting a received signal into which a predetermined pilot sequence is inserted by a transmitter and which is demodulated according to a predetermined system, and sequentially calculating a correlation value of the received signal, and generating an initial symbol timing signal based on the correlation value; a first frequency characteristics calculating step of calculating frequency characteristics of a channel between the transmitter and the receiver based on a pilot sequence extracted from the received signal according to the initial symbol timing signal, in a symbol timing uncorrected state; a frequency-to-time response converting step of converting a frequency of the frequency characteristics into a channel impulse response; a symbol timing. correction step of correcting a symbol timing based on the channel impulse response; a second frequency characteristics calculating step of extracting a pilot sequence according to a symbol timing signal after correction, and calculating symbol timing corrected frequency characteristics, in a symbol timing corrected state; and a demodulating step of demodulating the received signal according to the predetermined system, based on the symbol timing corrected frequency characteristics.

BRIEF DESCRIPTION OF THE DRAWINGS

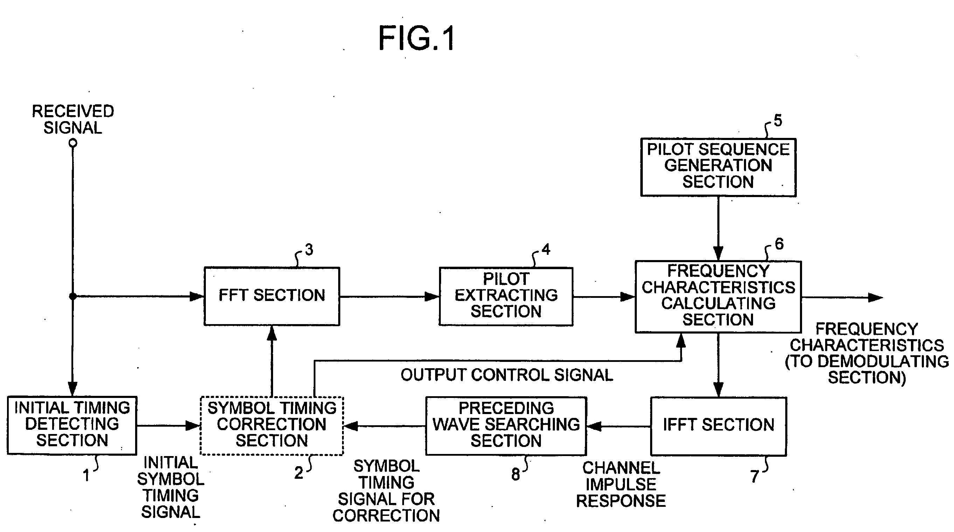

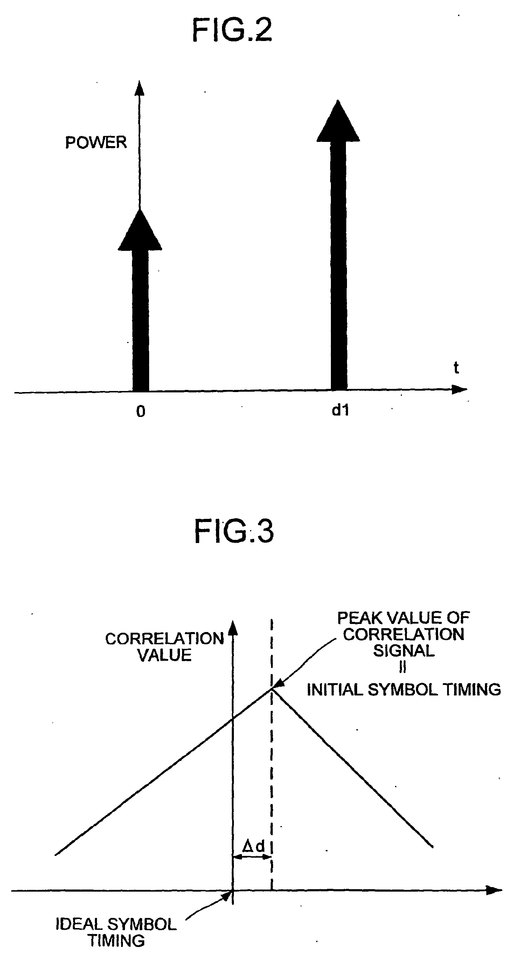

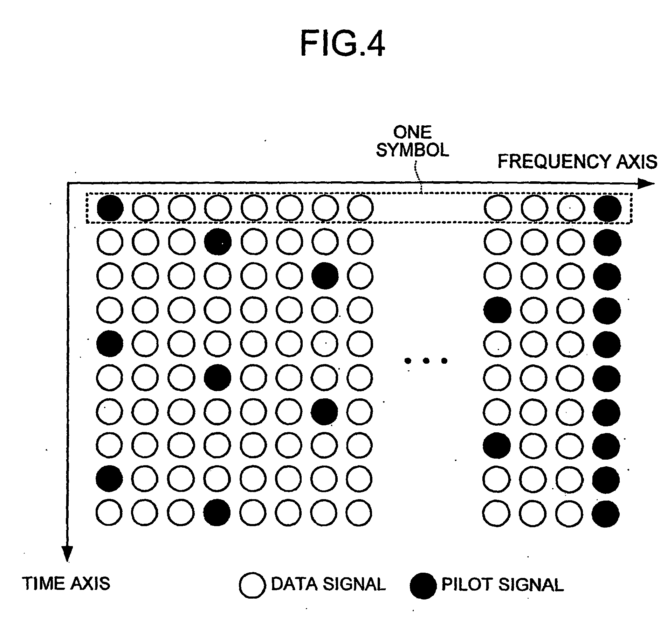

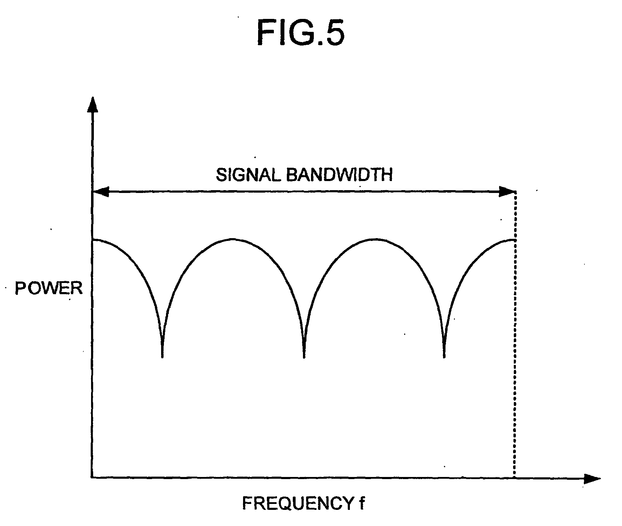

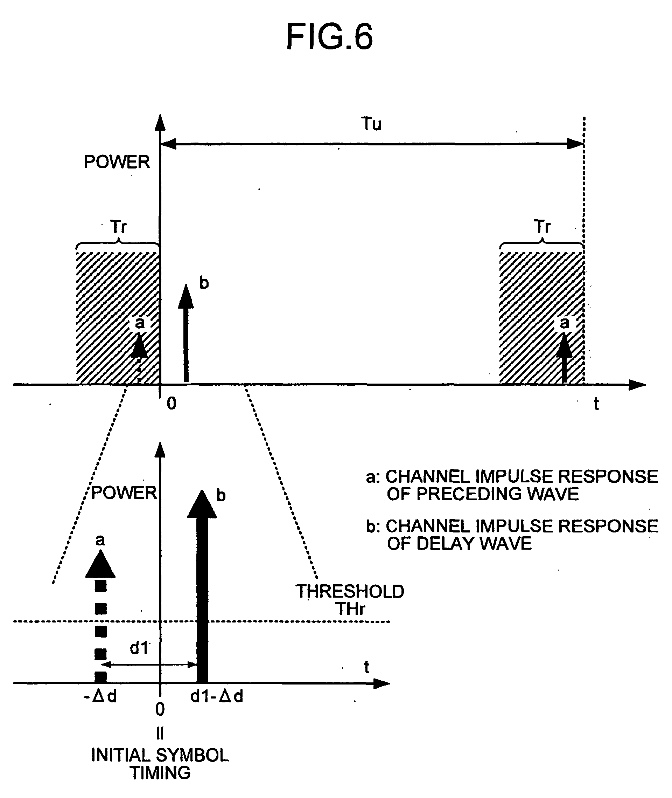

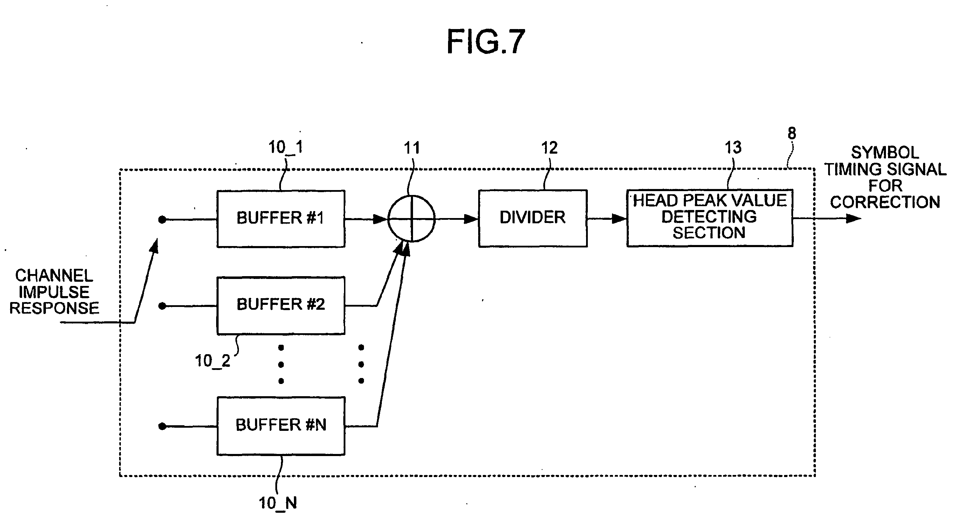

Fig. 1 is a structure diagram of a symbol timing correction circuit according to a first embodiment of the present invention; Fig. 2 is a schematic diagram of a delay profile of a received signal according to the present invention; Fig. 3 is a schematic diagram of a correlation value signal according to the present invention; Fig. 4 is a schematic diagram of a signal format for a digital terrestrial television broadcasting according to the present invention; Fig. 5 is a schematic diagram of frequency characteristics of a channel according to the present invention; Fig. 6 is a schematic diagram of a delay profile of a channel impulse response according to the present invention; Fig. 7 is a structure diagram of a preceding wave searching section according to a third embodiment of the present invention; Fig. 8 is a structure diagram of a conventional symbol timing detecting circuit; and Fig. 9 is an explanatory diagram of a state of a delay wave reception in a multi-path channel environment according to the present invention and according to a conventional technique.

BEST MODE FOR CARRYING OUT THE INVENTION

First Embodiment.

Fig. 1 is a structure diagram of a symbol timing correction circuit according to a first embodiment of the present invention. An initial timing detecting section 1 receives an OFDM modulated signal (hereinafter, "received signal"), and generates an initial symbol timing signal based on a correlation value signal of the received signal. A symbol timing correction section 2 generates a selective symbol timing signal used in an FFT section 3, and generates and supplies an output control signal to a frequency characteristics calculating section 6, based on the initial symbol timing signal and a symbol timing signal for correction that is output from a preceding wave searching section 8. The FFT section 3 subjects the received signal to FFT, and outputs sub-carrier signals. A pilot extracting section 4 extracts a data sequence corresponding to a known pilot sequence (hereinafter, "pilot data sequence") that is inserted into the sub-carrier signal according to a predetermined data format. A pilot sequence generation section 5 generates a copy of the pilot sequence (hereinafter, "copy pilot sequence"). The frequency characteristics calculating section 6 calculates frequency characteristics of a channel based on the pilot data sequence and the copy pilot sequence. An IFFT section 7 subjects the frequency characteristics of the channel to IFFT; and outputs a channel impulse response. The preceding wave searching section 8 generates the symbol timing signal for correction: The symbol timing signal for correction is a symbol timing signal corrected based on a channel impulse response.

The operation of a symbol timing correction circuit having the above structure according to the first embodiment will be explained.

An OFDM modulated received signal is input to the initial timing detecting section 1. The initial timing detecting section 1 has a structure similar to that of the symbol timing detecting circuit shown in Fig. 8. The initial timing detecting section 1 sequentially calculates a correlation value signal of the received signal, detects a peak position of the correlation value signal, and generates a symbol timing signal based on the peak position.

The operation of the initial timing detecting section 1 will be explained below with reference to Fig. 8. The received signal is input to the delay circuit 51, which delays the received signal by the time length Tu of the time window of the FFT processing. The time length Tu of the time window is set the same as the effective symbol time cycle length.

The complex conjugate signal generation circuit 52 generates a complex conjugate signal of a delayed received signal. The multiplier 53 multiplies the received signal by the complex conjugate signal.

The first moving average filter 54 moving averages output signals from the multiplier 53 during the time length Tg of the GI prescribed according to the OFDM modulation system. The first squarer 55 squares a moving averaged signal, and outputs a first squared output signal.

On the other hand, the second squarer 56 inputs and squares the received signal. The second moving average filter 57 moving averages the squared received signals during the time length Tg. The third squarer 58 squares an output signal from the second moving average filter 57, and outputs a second squared output signal.

The dividing circuit 59 divides the first squared output signal by the second squared output signal, thereby to obtain a correlation value signal.

The buffer 60 sequentially compares the correlation value signal with the threshold value of a symbol timing detection correlation value signal stored in advance. When a correlation value larger than the th reshold value is detected, the buffer 60 accumulates these correlation value signals during a constant period starting from this detection time.

The threshold value of the symbol timing detection correlation value signal is set as a value suitable for detecting an effective signal wave and obtaining a desired demodulation performance, based on power of a noise component of a received signal measured according to a preparatory experiment or the like.

The peak position detecting circuit 61 detects a peak position of the correlation values from the correlation value signals accumulated in the buffer 60. The timing signal generation circuit 62 generates a symbol timing signal based on the detected peak position.

The symbol timing signal is output, as the initial symbol timing signal, to the symbol timing correction section 2.

Generation of a symbol timing signal after correction will be explained with reference to Fig. 2 as a schematic diagram of a delay profile of a received signal. Fig. 2 is the exemplary diagram of a delay profile of a reception of a delay wave having larger reception power than that of a preceding wave with a delay time d1 from the preceding wave in the multi-path channel environment.

Fig. 3 is a schematic diagram of a correlation value signal calculated by the initial timing detecting section 1 in the situation shown in Fig. 2. As shown in Fig. 2, when the reception power of the delay wave is larger than that of the preceding wave, a maximum peak value of the correlation value signal appears with a delay from the reception timing of the preceding wave due to the influence of the delay wave (delay time: Äd).

The delay time Äd of the maximum peak value of the correlation value signal is not always the same as the reception delay time d1 of the delay wave having larger reception power, due to the influence of other wave or a noise component included in a received signal not shown in Fig. 2.

The initial timing detecting section 1 generates the initial symbol timing signal based on the correlation value signal. Therefore, the initial symbol timing signal is delayed by the time Äd from an ideal symbol timing determined by the reception timing of the preceding wave.

The symbol timing correction section 2 outputs the initial symbol timing signal as a selective symbol timing signal, in a state that the symbol timing is not yet corrected (hereinafter, "uncorrected state").

The symbol timing correction section 2 outputs, to the frequency characteristics calculating section 6, an output control signal that indicates that the selective symbol timing signal is in the uncorrected state.

The FFT section 3 inputs the received signal, sequentially sets the time window of the effective symbol time cycle length Tu based on the selective symbol timing signal output from the symbol timing correction section 2, sequentially performs FFT on the received signal included in the reception window, and outputs a plurality of sub-carrier signals.

The pilot extracting section 4 stores a signal format of each sub-carrier signal. Fig. 4 is a schematic diagram of a signal format for a digital terrestrial television broadcasting. Each sub-carrier signal includes a data sequence to be transmitted (indicated by a white circle in Fig. 4) and a known pilot sequence (indicated by a black circle in Fig. 4) according to the format shown in Fig. 4. The pilot extracting section 4 extracts data from a predetermined sub-carrier signal at a timing indicated by the black circle, thereby to extract only a pilot data sequence corresponding to the known pilot sequence.

On the other hand, the pilot signal generation section 5 stores in advance the pilot sequence, and generates a copy pilot sequence in synchronism with a signal format of each sub-carrier signal stored in the pilot extracting section 4.

The frequency characteristics calculating section 6 calculates frequency characteristics H(z) of the channel according to the following expression 1, based on frequency characteristics Y(z) of the pilot data sequence extracted from the received signal and frequency characteristics X (z) of the copy pilot sequence.

$$H(z) = Y(z) / X(z) \qquad (1)$$

Fig. 5 is a schematic diagram of the frequency characteristics H(z) of the channel.

As explained above, when the symbol timing correction section 2 outputs an output control signal that indicates that the selective symbol timing signal is in the uncorrected state, the frequency characteristics calculating section 6 outputs the frequency characteristics H(z) of the channel to the IFFT section 7.

The IFFT section 7 inversely performs FFT on the frequency characteristics H(z) of the channel, and generates a channel impulse response as a time axis response signal during a period from a symbol timing (initial time t = 0) to a time length (t = Tu) of the time window prescribed by the selective symbol timing signal (same as the initial symbol timing signal in the uncorrected state).

Fig. 6 is a schematic diagram of a delay profile of a channel impulse response. In Fig. 6, b represents a channel impulse response of a delay wave.

The initial time t = 0 is delayed by the time Äd from the ideal symbol timing due to the influence of the delay wave as described above. Therefore, for example in Fig. 9, when the symbol DATA1 is a symbol to be IFFT-performed, the channel impulse response of the delay wave of the symbol DATA appears before the initial time t = 0.

As the channel impulse response is a cycle function having t = 0 to Tu as one cycle, the channel impulse response before the initial time t = 0 (i.e. t = -Tu to 0) becomes the same as the channel impulse response (t = 0 to Tu) that is obtained as a result of the IFFT processing.

The channel impulse response (t = (Tu - Tr) to Tu) starting from the time (t = Tu - Tr, 0 < Tr < Tu, which is clear from a meshed portion in Fig. 6) retroactive from the time t = Tu by a predetermined time length Tr till the time t = Tu is regarded as the channel impulse response, thereby to detect the channel impulse response "a" of the preceding wave (as identified by a broken line in Fig. 6).

A time suitable to correct the symbol timing is set in advance as the time length Tr to copy the channel impulse response, based on a distribution of the delay time from the preceding time to the delay wave that is obtained based on a preparatory experiment or the like.

The preceding wave searching section 8 stores a threshold value (hereinafter referred to as symbol timing correction threshold value THr) of a power value for detecting the channel impulse response of the preceding wave. The preceding wave searching section 8 detects a peak value of a channel impulse response having a larger power value than the symbol timing correction threshold value THr during a range of t = -Tr to 0 (that is the same as t = (Tu - Tr) to Tu) of the channel impulse response.

The symbol timing correction threshold value THr is determined based on the reception power of the preceding wave calculated based on a preparatory experiment or the like. A value larger than the reception power of the noise component is set for the symbol timing correction threshold value THr.

When a peak value of one channel impulse response is detected as a result of the peak value detection processing, the preceding wave searching section 8 specifies the peak value as a "head peak value".

When peak values of a plurality of channel impulse responses are detected, the preceding wave searching section 8 specifies a peak value of the earliest appearance time as the head peak value.

The preceding wave searching section 8 outputs information representative of the detection time t = -Äd of the header peak value as a "symbol timing signal for correction".

The symbol timing correction section 2 time-shifts the initial symbol timing signal by -Äd to correct the timing according to the symbol timing signal for correction, and outputs the symbol timing signal after correction as the selective symbol timing signal.

The symbol timing correction section 2 outputs an output control signal indicative of a state (hereinafter, "corrected state") that the timing of the selective symbol timing signal has been corrected.

in the symbol timing corrected state, the FFT section 3 sequentially sets the time window following the selective symbol timing signal after the timing correction, and sequential performs FFT on the received signal.

When the output control signal is in the corrected state, the frequency characteristics calculating section 6 outputs frequency characteristics H(z) of channel to the demodulating section provided at the latter stage of the symbol timing correction circuit.

The demodulating section OFDM demodulates the received signal based on frequency characteristics H(z) of channel H(z).

As explained above, the symbol timing correction circuit according to the first embodiment detects the initial symbol timing signal based on the correlation value signal of the received signal, and th en calculates frequency characteristics H(z) of channel H(z) based on th e initial symbol timing signal. Further, the symbol timing correction circuit specifies the head peak value from the channel impulse response obtained by performing IFFT on the frequency characteristics H(z), and corrects the symbol timing based on the detection timing of th e head peak value. Therefore, even when the reception power of the delay wave is large in the multi-path channel environment, the symbol timing can be specified in high precision.

In the first embodiment, the initial timing detecting section 1 has the structure shown in Fig. 8, and calculates the correlation value signal by dividing the first squared output signal by the second squared output signal. However, when the time length Tg averaged by the moving average filters 54 and 57 is sufficiently larger than the momentary variation cycle of the signal power of the received signal, the variation of the average power of the received signal becomes negligibly small. Therefore, the second squared output signal can be regarded as a constant value. In this case, the second squarer 56, the second moving average filter 57, the third squarer 57, and the divider 59 can be deleted from the initial timing detecting section 1. Then, the first squared output signal may be divided by a predetermined constant to obtain a correlation value signal.

While the peak position detecting circuit 61 detects the peak position of the correlation value from the correlation value signal accumulated in the buffer 60, the structure is not limited to this.

For example, a plurality of buffers that accumulate correlation value signals for one effective symbol time cycle length Tu (hereinafter, "symbol length correlation value signal") may be provided. These buffers accumulate correlation value signals output from the divider 59 while sequentially switching over the accumulating buffers. The peak position detecting circuit 61 adds together the symbol length correlation value signals accumulated in the buffers, and divides the result by the number of buffers corresponding to the addition, thereby to generate an averaged correlation value signal for one effective symbol time cycle length Tu. The peak position detecting circuit 61 detects a peak value from the averaged correlation value signal, and generates an initial symbol timing signal.

With the above structure, the initial symbol timing can be detected in high precision, even when noise power has a high proportion in the reception power.

While the FFT section 3 subjects the received signal to FFT to reproduce a plurality of sub-carrier signals, it is a matter of course that a similar effect can be obtained by reproducing the sub-carrier signals according to a discrete Fourier transform (hereinafter, "DFT"). Similarly, while the IFFT section 7 subjects the frequency characteristics of the received signal to inverse FFT, the channel time response time may be generated according to the inverse DFT (hereinafter, "IDFT") processing.

The known pilot sequence is inserted into the received signal following the signal format exemplified in Fig. 4, and the pilot extracting section 4 extracts the pilot data sequence following the signal format. However, the signal format of the received signal is not limited to the signal format for the digital terrestrial television broadcasting exemplified in Fig. 4, and a signal format of a frame structure widely used in the digital radio communication system may be used.

In the signal format of a frame structure, a known pilot sequence is inserted into the head portion (i.e., preamble) of each signal frame. The pilot extracting section 4 extracts a pilot data sequence from the preamble of the signal frame.

The preceding wave searching section 8 compares the power value of the channel impulse response with the symbol timing correction threshold value THr, thereby to detect the head peak value. However, the method is not limited to this, and it is also possible to arrange as follows. The preceding wave searching section 8 stores the signal amplitude for detecting the channel impulse response as the symbol timing correction threshold value THr. The preceding wave searching section 8 compares the amplitude of the channel impulse response with the symbol timing correction threshold value THr, thereby to detect the head peak value.

Second Embodiment.

In the first embodiment, the preceding wave searching section 8 detects a peak value of a channel impulse response based on the symbol timing correction threshold value THr stored in advance, and generates a symbol timing signal for correction. As a second embodiment, the preceding wave searching section 8 may be configured to determine the symbol timing correction threshold value THr based on a reception power of a channel impulse response of a delay wave of a channel impulse response, and detect a peak value of the channel impulse response.

Thus, the preceding wave searching section 8 carries out a preceding wave search processing in a different manner from that in the first embodiment, and all the rest of the processing is similar to that of the first embodiment. Therefore, only the preceding wave search processing will be explained below, with the explanation of other processing omitted. Portions of the same structures are attached with identical reference numerals, and the explanation thereof will be omitted.

When the copy channel impulse response is generated as shown in Fig. 6, the preceding wave searching section 8 detects a peak value (hereinafter, "maximum peak value") at which the power of the channel impulse response becomes maximum from the channel impulse response.

The preceding wave searching section 8 multiplies the maximum peak value by a predetermined coefficient á (where $0 < á \leq 1$) to obtain a product, which is set as the symbol timing correction threshold value THr.

A suitable value is set for the coefficient á that is used to calculate the symbol timing correction threshold value THr, by taking into account a channel state such as a distribution of the reception power of each multi-path wave measured according to a preparatory experiment or the like.

The preceding wave searching section 8 detects the head peak value based on the symbol timing correction threshold value THr over the range of $t = -Tr$ to 0 of the channel impulse response.

As explained above, the preceding wave searching section 8 searches for the preceding wave, and can automatically set the suitable symbol timing correction threshold value THr according to the power of the received signal. As a result, the detection precision of the head peak value can be increased, and the symbol timing can be corrected in high precision.

In the second embodiment, the symbol timing correction threshold value THr is calculated by multiplying the maximum peak value by the coefficient á. However, the determination of the symbol timing correction threshold value THr is not limited to this method. For example, it is also possible to arrange such that the preceding wave searching section 8 stores in advance a plurality of symbol timing correction threshold values THr, and selects one symbol timing correction threshold value THr based on the maximum peak value, thereby to detect the head peak value.

Third Embodiment.

In the first embodiment, the preceding wave searching section 8 detects a head peak value based on the channel impulse response concerning one focused symbol generated by the IFFT section 7, and generates a symbol timing signal for correction. As a third embodiment, the preceding wave searching section 8 may be configured to average channel impulse responses of a plurality of symbols, detect a head peak value and generate a symbol timing signal for correction based on the averaged channel impulse response.

Thus, the third embodiment is different from the first embodiment in that the preceding wave searching section 8 averages the channel impulse response, and the rest of the processing is same. Therefore, only the averaging of the channel impulse response performed by the preceding wave searching section 8 will be explained below. Portions of the same structures as those in the first embodiment are attached with identical reference numerals, and the explanation thereof will be omitted.

Fig. 7 is a structure diagram of the preceding wave searching section 8 according to the third embodiment. In Fig. 7, reference numerals 10_1 to 10_N denote buffers that store the channel impulse response, and 11 denotes an adder that adds channel impulse responses of a plurality of symbols stored in the buffers 10_1 to 10_N. Reference numeral 12 denotes a divider that divides the output signal from the adder 11 by a number of symbols to be added, thereby to calculate an averaged channel impulse response. Reference numeral 13 denotes a head peak value detecting section that detects the head peak value from the averaged channel impulse response, and generates a symbol timing signal for correction.

The operation of the preceding wave searching section 8 will be explained.

The channel impulse response generated by the IFFT section 7 is sequentially accumulated in the buffers 10_1 to 10_N by switching over these buffers for each symbol.

The adder 11 inputs the channel impulse response from each of the buffers 10_1 to 10_N after the buffers accumulate data. The adder 11 adds the buffer data, and outputs an added channel impulse response over the time length of t = 0 to Tu.

The divider 12 sequentially divides the added channel impulse response by the number of symbols to be added (= number of buffers), thereby to calculate an averaged channel impulse response.

The head peak value detecting section 13 regards the channel impulse response from the time (t = Tu - Tr, 0 < Tr < Tu) retroactive from the time t = Tu by the predetermined time length Tr to the time t = Tu, as the channel impulse response during the time t = -Tr to 0. Then, th e head peak value detecting section 13 detects the head peak value, and generates the symbol timing signal for correction in a similar manner to that in the first embodiment.

As explained above, the preceding wave searching section 8 according to the third embodiment averages the channel impulse responses concerning a plurality of symbols, thereby to detect a head peak value. Therefore, it is possible to suppress the influence of a noise component included in the received signal, and increase the precision in the detection of the symbol timing.

In the third embodiment, the preceding wave searching section 8 accumulates channel impulse responses generated by the IFFT section 7 corresponding to a plurality of symbols, averages the channel impulse response, detects a head peak value, and generates the initial symbol timing signal based on the averaged channel impulse response. However, the structure is not limited to this.

For example, the frequency characteristics calculating section 6 may have an FIR filter type averaging unit that averages frequency characteristics of a plurality of symbols. The IFFT section 7 may generate a channel impulse response based on the averaged frequency characteristics. The preceding wave searching section 8 may detect a head peak value from the channel impulse response that is output from the IFFT section 7. Further, the averaging unit of the IFFT section 7 is not limited to the FIR filter type, and it is also possible use an averaging unit of an IIR filter type, or other unit that can average channel impulse responses of a plurality of symbols.

In the embodiment of the present invention, it is particularly explained that the symbol timing correction circuit according to the present invention is applied to the communication system of the OFDM modulation system. However, the modulation and demodulation system to which the symbol timing correction circuit according to the present invention is applied is not limited to only the OFDM modulation system, and may also be applied to the communication system of the multi-carrier CDMA system, for example.

Specifically, a multi-carrier CDMA modulated received signal is input to the symbol timing correction circuit, which carries out a symbol timing correction processing in a similar manner to that of the embodiment according to the present invention. In a symbol timing corrected state, the symbol timing correction circuit calculates frequency characteristics of the channel based on the corrected symbol timing. The demodulating circuit demodulates the received signal according to the multi-carrier CDMA system based on the frequency characteristics. With this arrangement, it is also possible to obtain a similar effect to that of the embodiment.

Fourth Embodiment.

In the first embodiment, the initial timing detecting section moving averages the signal obtained by processing the received signal using the moving average filter, during the time length Tg of the GI prescribed according to the OFDM modulation system, and calculates a correlation value signal of the received signal. However, the initial timing detecting section according to a fourth embodiment calculates the correlation signal based on the received signal having a time length Tgs shorter than the time length Tg.

In the fourth embodiment, the initial timing signal generation processing that the initial timing detecting section carries out is different from that in the first embodiment. Therefore, the operation of the initial timing detecting section will be explained with reference to a structure of the initial timing detecting section shown in Fig. 8. All other like structures are attached with like reference numerals, and their explanation will be omitted.

The multiplier 53 multiplies the received signal by the complex conjugate signal of the received signal output from the complex conjugate signal generation circuit 52, and outputs the result to the first moving average filter 54.

The first moving average filter 54 is set with the integration time length Tgs shorter than the time length Tg of the GI prescribed according to the OFDM modulation system, and moving averages the output signal from the multiplier 53 during the integration time length Tg.

The first squarer 55 squares a moving averaged signal, and outputs a first squared output signal.

On the other hand, the second squarer 56 inputs and squares the received signal. The second moving average filter 57 moving averages the squared received signals during the integration time length Tgs. The third squarer 58 squares an output signal from the second moving average filter 57, and outputs a second squared output signal.

The dividing circuit 59 divides the first squared output signal by the second squared output signal, thereby to obtain a correlation value signal.

The buffer 60 sequentially compares the correlation value signal with the threshold value of a symbol timing detection correlation value signal stored in advance. When a correlation value larger than the threshold value is detected, the buffer 60 accumulates these correlation value signals during a constant period starting from this detection time.

The peak position detecting circuit 61 detects a peak position of the correlation values from the correlation value signals accumulated in the buffer 60. The timing signal generation circuit 62 generates a symbol timing signal based on the detected peak position.

The integration time length Tgs is a time length that is suitable to detect a peak position of the correlation value and is shorter than the time length Tg of GI according to the OFDM modulation system, set in advance based on a preparatory experiment and simulation.

The timing detection precision of the initial symbol timing signal generated based on the received signal of the integration time length Tgs is lower than that when the timing is detected based on the ideal time length Tg.

The frequency characteristics calculating section 6, the IFF section 7, the preceding wave searching section 8, and the symbol timing correction section 2 correct the timing of the initial symbol timing signal according to a method similar to that of the first embodiment, and outputs a selective symbol timing signal. Therefore, the timing detection precision of the timing corrected selective symbol timing signal becomes similar to that of the first embodiment.

As explained above, according to the fourth embodiment, when the received signal time length used to calculate the correlation value is set shorter than the time length Tg of GI according to the OFDM modulation system, the load of the initial symbol timing detecting section to carry out the processing can be reduced. Consequently, it becomes possible to speed up the processing and decrease the circuit scale of the initial timing detecting section.

In the fourth embodiment, it is explained that the modulation processing is carried out according to the OFDM system, and the received signal having guard intervals (GI$_1$, GI$_2$) inserted into each data symbol is input, as shown in Fig. 9. However, the structure of the received signal is not limited to this. The received signal may have a predetermined frame structure, and a known pilot sequence may be inserted into the head (preamble) of each frame.

When the received signal has a frame structure, the initial timing detecting section calculates a correlation value signal based on the known pilot sequence of the preamble, and generates the initial symbol timing signal. The integration time length Tgs shorter than the time length corresponding to the known pilot sequence is set in advance, and the initial symbol timing signal is generated based on the received signal of the time length Tgs. With this arrangement, effects similar to those according to the fourth embodiment can be obtained.

As explained above, according to the present invention, the frequency of the frequency characteristics of the channel calculated based on the initial symbol timing signal is converted into a channel impulse response. The channel impulse response of the preceding wave is detected, and a symbol timing is corrected. Therefore, there is an effect that the symbol timing can be corrected in high precision even when the reception power of the delay wave in the multi-path channel environment is large.

According to the next invention, the symbol timing correction threshold value is determined corresponding to the power value of the channel impulse response. Therefore, the symbol timing correction threshold value is automatically set to a suitable level, and the channel impulse response of the preceding wave can be detected accurately. Consequently, there is an effect that the correction precision of the symbol timing can be increased.

According to the next invention, the averaged channel impulse response concerning a plurality of symbol data is calculated, and the symbol timing is corrected based on the averaged channel impulse response. Therefore, there is an effect that, even when noise power has a high proportion in the reception power, the precision of the symbol timing correction can be increased by suppressing the influence of a noise component included in the received signal.

According to the next invention, the initial symbol timing detected based on the correlation value of the received signal is corrected according to any one of the methods. In the symbol timing corrected state, the symbol timing correction circuit calculates symbol timing corrected frequency characteristics. The demodulating unit demodulates the received signal based on the symbol timing corrected frequency characteristics. Therefore, there is an effect that it is possible to provide a receiver capable of improving the demodulation characteristics by correcting the symbol timing in high precision.

Further, the demodulating unit demodulates the received signal based on the symbol timing corrected frequency characteristics calculated by the frequency characteristics calculating unit of the symbol timing correction circuit. Therefore, there is an effect that it is possible to suppress an increase in the circuit scale due to the installation of the symbol timing correction circuit on the receiver.

According to the next invention, the initial timing detecting unit sequentially calculates a correlation value based on a received signal of a predetermined time shorter than a time necessary to obtain a target symbol timing detection precision, and generates an initial symbol timing signal based on the correlation value. Therefore, there is an effect that it is possible to reduce the processing load required to estimate the symbol timing, thereby to decrease the circuit scale.

INDUSTRIAL APPLICABILITY

As explained above, the symbol timing correction circuit, the receiver, the symbol timing correction method, and the demodulation processing method according to the present invention are effective for a digital radio communication system or a digital broadcasting system. Particularly, the symbol timing correction circuit, the receiver, the symbol timing correction method, and the demodulation processing method are suitable to specify a timing symbol, when the reception power of a delay wave is large or when the proportion of noise power in the reception power is large in the multi-path channel environment.

**Claims**

1. A symbol timing correction circuit that is installed in a receiver of a communication system, comprising:

   a frequency characteristics calculating unit that receives a received signal containing a predetermined pilot sequence and an initial symbol timing signal generated from the received signal using a predetermined method, extracts the pilot sequence from the received signal using the initial symbol timing signal, and calculates frequency characteristics of a channel between the receiver and a transmitter that has transmitted the received signal, from the pilot sequence;
   a frequency-to-time response converting unit that converts the frequency characteristics into a channel impulse response; and
   a symbol timing correction unit that corrects a symbol timing for demodulation processing using the channel impulse response.

2. The symbol timing correction circuit according to claim 1, wherein the symbol timing correction unit compares the channel impulse response with a predetermined symbol timing correction threshold value thereby to detect a channel impulse response of a preceding wave, and corrects the symbol timing using the channel impulse response detected.

3. The symbol timing correction circuit according to claim 2, wherein the symbol timing correction unit calculates the symbol timing correction threshold value from a power value of the channel impulse response.

4. The symbol timing correction circuit according to claim 2, wherein the symbol timing correction unit calculates the symbol timing correction threshold value from amplitude of the channel impulse response.

5. The symbol timing correction circuit according to claim 1, wherein the symbol timing correction unit comprises:

> a memory unit that stores a plurality of channel impulse responses concerning symbol data; and
> an averaging unit that averages the plurality of channel impulse responses, and generates an averaged channel impulse response, wherein the symbol timing correction unit corrects a symbol timing based on the averaged channel impulse response.

6. The symbol timing correction circuit according to claim 2, wherein the symbol timing correction unit comprises:

> a memory unit that stores a plurality of channel impulse responses concerning symbol data; and
> an averaging unit that averages the plurality of channel impulse responses, and generates an averaged channel impulse response, wherein the symbol timing correction unit corrects a symbol timing based on the averaged channel impulse response.

7. The symbol timing correction circuit according to claim 1, wherein the frequency characteristics calculating unit comprises an averaging unit that generates an averaged frequency characteristics by calculating an average of a plurality of frequency characteristics concerning symbol data, and the frequency-to-time response converting unit converts the averaged frequency characteristics into the channel impulse response.

8. The symbol timing correction circuit according to claim 2, wherein the frequency characteristics calculating unit comprises an averaging unit that generates an averaged frequency characteristics by calculating an average of a plurality of frequency characteristics concerning symbol data, and the frequency-to-time response converting unit converts the averaged frequency characteristics into the channel impulse response.

9. A receiver comprising:

> an initial timing detecting unit that receives a received signal containing a predetermined pilot sequence, the received signal has been demodulated according to a predetermined system, sequentially calculates a correlation value of the received signal, and generates an initial symbol timing signal from the correlation value;
> a symbol timing correction circuit including

> a frequency characteristics calculating unit that receives the received signal and an initial symbol timing signal generated from the received signal using a predetermined method, extracts the pilot sequence from the received signal using the initial symbol timing signal, and calculates frequency characteristics of a channel between the receiver and a transmitter that has transmitted the received signal from the pilot sequence;
> a frequency-to-time response converting unit that converts the frequency characteristics into a channel impulse response; and
> a symbol timing correction unit that corrects a symbol timing for demodulation processing using the channel impulse response; and
> a demodulating unit that demodulates the received signal according to the predetermined method, wherein
> in a symbol timing corrected state,
> the frequency characteristics calculating unit extracts a pilot sequence according to a symbol timing signal after correction, and calculates frequency characteristics after the correction of the symbol timing, and
> the demodulating unit demodulates the received signal based on the frequency characteristics after the correction of the symbol timing.

10. The receiver according to claim 9, wherein the symbol timing correction unit compares the channel impulse response with a predetermined symbol timing correction threshold value thereby to detect a channel impulse response of a preceding wave, and corrects the symbol timing using the channel impulse response detected.

11. The receiver according to claim 9, wherein the symbol timing correction unit comprises:

> a memory unit that stores a plurality of channel impulse responses concerning symbol data; and
> an averaging unit that averages the plurality of channel impulse responses, and generates an averaged channel impulse response, wherein the symbol timing correction unit corrects a symbol timing based on the averaged channel impulse response.

12. The receiver according to claim 9, wherein the frequency characteristics calculating unit comprises an averaging unit that generates an averaged frequency characteristics by calculating an average of a plurality of frequency characteristics concerning symbol data, and

the frequency-to-time response converting unit converts the averaged frequency characteristics into the channel impulse response.

13. The receiver according to claim 9, wherein the initial timing detecting unit calculates the correlation value from a received signal of a predetermined time shorter than a time necessary to obtain a target symbol timing detection precision.

14. The receiver according to claim 9, wherein the received signal is has been orthogonal frequency division multiplexing modulated, and

in a symbol timing corrected state, the demodulating unit subjects the received signal to orthogonal frequency division multiplexing de-modulation processing using the symbol timing corrected frequency characteristics.

15. The receiver according to claim 13, wherein the received signal is has been orthogonal frequency division multiplexing modulated, and

in a symbol timing corrected state, the demodulating unit subjects the received signal to orthogonal frequency division multiplexing de-modulation processing using the symbol timing corrected frequency characteristics.

16. The receiver according to claim 9, wherein the received signal has been multi-carrier code division multiple access modulated, and

in a symbol timing corrected state, the demodulating unit subjects the received signal to multi-carrier code division multiple access de-modulation processing using the symbol timing corrected frequency characteristics.

17. The receiver according to claim 13, wherein the received signal has been multi-carrier code division multiple access modulated, and

in a symbol timing corrected state, the demodulating unit subjects the received signal to multi-carrier code division multiple access de-modulation processing using the symbol timing corrected frequency characteristics.

18. A method, for correcting a demodulation processing symbol timing, to be employed in a receiver of a communications system, comprising:

receiving a received signal containing a predetermined pilot sequence and an initial symbol timing signal generated from the received signal using a predetermined method;
extracting the pilot sequence from the received signal using the in itial symbol timing signal;
calculating frequency characteristics of a channel between the receiver and a transmitter that has transmitted the received signal from the pilot sequence;
converting the frequency characteristics into a channel impulse response; and
correcting a symbol timing for demodulation processing using the channel impulse response.

19. A demodulation processing method to be employed in a receiver comprising:

receiving a received signal that contains a predetermined pilot sequence and that has been demodulated using a predetermined method, and
sequentially calculating a correlation value of the received signal, and generating an initial symbol timing signal from the correlation value;
in a symbol timing uncorrected state
extracting the pilot sequence from the received signal using the initial symbol timing signal;
calculating frequency characteristics of a channel between the receiver and a transmitter that has transmitted the received signal from the pilot sequence;
converting the frequency characteristics into a channel impulse response; and
correcting a symbol timing using the channel impulse response to thereby generate a symbol timing signal after correction, and
in a symbol timing corrected state
extracting the pilot sequence using the symbol timing signal after correction; and
calculating frequency characteristics after symbol timing correction using the pilot sequence; and
demodulating the received signal using the predetermined method, based on the frequency characteristics after symbol timing correction.

FIG.1

RECEIVED SIGNAL

INITIAL TIMING DETECTING SECTION 1

INITIAL SYMBOL TIMING SIGNAL

SYMBOL TIMING CORRECTION SECTION 2

SYMBOL TIMING SIGNAL FOR CORRECTION

OUTPUT CONTROL SIGNAL

FFT SECTION 3

PILOT EXTRACTING SECTION 4

PILOT SEQUENCE GENERATION SECTION 5

FREQUENCY CHARACTERISTICS CALCULATING SECTION 6

FREQUENCY CHARACTERISTICS (TO DEMODULATING SECTION)

IFFT SECTION 7

CHANNEL IMPULSE RESPONSE

PRECEDING WAVE SEARCHING SECTION 8

# FIG.2

# FIG.3

# FIG.4

# FIG.5

# FIG.6

a: CHANNEL IMPULSE RESPONSE OF PRECEDING WAVE

b: CHANNEL IMPULSE RESPONSE OF DELAY WAVE

# FIG.7

BUFFER #1    10_1

BUFFER #2    10_2

BUFFER #N    10_N

11

DIVIDER    12

HEAD PEAK VALUE
DETECTING
SECTION    13

8

SYMBOL
TIMING SIGNAL
FOR
CORRECTION

CHANNEL
IMPULSE
RESPONSE

EP 1 392 015 A1

## FIG.8

RECEIVED SIGNAL

DELAY CIRCUIT — 51

COMPLEX CONJUGATE SIGNAL GENERATION CIRCUIT — 52

53

FIRST MOVING AVERAGE FILTER — 54

FIRST SQUARER — 55

SECOND SQUARER — 56

SECOND MOVING AVERAGE FILTER — 57

THIRD SQUARER — 58

DIVIDER — 59

BUFFER — 60

PEAK POSITION DETECTING CIRCUIT — 61

TIMING SIGNAL GENERATION CIRCUIT — 62

SYMBOL TIMING SIGNAL (TO DEMODULATING SECTION)

EP 1 392 015 A1

# FIG.9

IDEAL SYMBOL TIMING

| Tg | Tu | Tg | Tu |

PRECEDING WAVE
| GI1 | DATA1 | GI2 | DATA2 |

DELAY WAVE
| DATA0 | GI1 | DATA1 | GI2 | DATA2 |

RANGE IN WHICH SYMBOL TIMING CAN BE SET

DELAY TIME: d1

EP 1 392 015 A1

**EP 1 392 015 A1**

## INTERNATIONAL SEARCH REPORT

| | International application No. |
|---|---|
| | PCT/JP03/00730 |

**A. CLASSIFICATION OF SUBJECT MATTER**
   Int.Cl⁷ H04J11/00, H04J13/04

According to International Patent Classification (IPC) or to both national classification and IPC

**B. FIELDS SEARCHED**

Minimum documentation searched (classification system followed by classification symbols)
   Int.Cl⁷ H04J11/00, H04J13/04

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-217802 A (Kyocera Corp.), 10 August, 2001 (10.08.01), | 1-4,9,10, 13-19 |
| A | Figs. 1, 4 (Family: none) | 5-8,11,12 |
| Y | JP 11-145931 A (Nippon Telegraph And Telephone Corp.), | 1-4,9,10, 13-19 |
| A | 28 May, 1999 (28.05.99), Fig. 1 & JP 3067720 B2 | 5-8,11,12 |
| Y | JP 2000-134176 A (Advanced Digital Television Broadcasting Laboratory), | 1-4,9,10, 13-19 |
| A | 12 May, 2000 (12.05.00), Full text; all drawings (Family: none) | 5-8,11,12 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 April, 2003 (10.04.03) | 22 April, 2003 (22.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

21

### INTERNATIONAL SEARCH REPORT

| | International application No. |
|---|---|
| | PCT/JP03/00730 |

**C (Continuation). DOCUMENTS CONSIDERED TO BE RELEVANT**

| Category* | Citation of document, with indication, where appropriate, of the relevant passages | Relevant to claim No. |
|---|---|---|
| A | JP 11-503895 A (Philips Electronics N.V.), 30 March, 1999 (30.03.99), Page 14, lines 9 to 22; Fig. 1 & WO 97/29568 A1 & KR 98703715 A & EP 827655 A1 & US 5802117 A | 1-19 |
| A | JP 2000-332727 A (Toshiba Corp.), 30 November, 2000 (30.11.00), Page 4, left column, line 46 to right column, line 4; Fig. 1 (Family: none) | 1-19 |
| A | JP 2000-295195 A (Nippon Hoso Kyokai), 20 October, 2000 (20.10.00), Full text; all drawings (Family: none) | 1-19 |
| A | JP 2002-44052 A (Matsushita Electric Industrial Co., Ltd.), 08 February, 2002 (08.02.02), Figs. 2, 8 & WO 02/11334 A1 & EP 1213864 A1 & US 2002/0181489 A1 & AU 200227523 A & KR 2002033209 A | 16,17 |
| A | JP 2001-28557 A (Matsushita Electric Industrial Co., Ltd.), 30 January, 2001 (30.01.01), Figs. 1, 5, 6 & EP 1069725 A2 & KR 2001015294 A & CN 1280427 A | 16,17 |

Form PCT/ISA/210 (continuation of second sheet) (July 1998)